# EUROPÄISCHE PATENTSCHRIFT

(11) **EP 1 326 907 B1**
(45) Veröffentlichungstag und Bekanntmachung des Hinweises auf die Patenterteilung: **28.03.2007**
(21) Anmeldenummer: 00967841.8
(22) Anmeldetag: 05.10.2000
(51) Int. Cl.: C08G 12/32, C08L 61/28, C08J 3/03, C08K 5/053

(54) **KONZENTRIERTE STABILE WÄSSRIGE MELAMINHARZZUSAMMENSETZUNG**
CONCENTRATED, STABLE AQUEOUS MELAMINE-FORMALDEHYDE RESIN COMPOSITION
COMPOSITION DE RESINE MELAMINE AQUEUSE STABLE CONCENTREE

(43) Veröffentlichungstag der Anmeldung: 16.07.2003
(73) Patentinhaber: BASF Aktiengesellschaft, 67056 Ludwigshafen (DE)
(72) Erfinder: BADER, Klaus, 67227 Frankenthal (DE); WIPPEL, Wolfgang, 67067 Ludwigshafen (DE); KUMMER, Matthias, 67273 Weisenheim am Berg (DE); SCHNURR, Werner, 67273 Herxheim (DE)
(74) Vertreter: Isenbruck, Günter
(86) Internationale Anmeldenummer: PCT/EP2000/009749
(87) Internationale Veröffentlichungsnummer: WO 2002/028934

(56) Entgegenhaltungen:
- EP-A- 0 002 044
- EP-A- 0 052 211
- EP-A- 0 077 067
- EP-A- 0 285 734
- DE-A- 2 054 663
- DE-A- 3 700 344

## Beschreibung

Die Erfindung betrifft eine wäßrige Harzzusammensetzung, ein Verfahren zur Herstellung dieser Harzzusammensetzung, eine Tränkharzdispersion und ein Verfahren zu deren Herstellung sowie die Lagerung und Verwendung dieser Harzzusammensetzung und Tränkharzdispersion.

Wäßrige Lösungen von Melamin-Formaldehyd-Kondensaten, auch Melamin-Tränkharze genannt, werden zum Tränken von saugfähigen Trägermaterialien, beispielsweise Papierbahnen, Vliesstoffen oder anderen, dem Fachmann geläufigen Geweben und Gewirken verwendet.

Die so behandelten Trägermaterialien können beispielsweise durch Verpressen, insbesondere Heißverpressen, zu Verbunden verarbeitet werden, beispielsweise als Oberflächenbeschichtung von Werkstoffen. In diesem Zusammenhang sei beispielsweise die Laminatherstellung genannt. Hierbei ist es insbesondere vorteilhaft, mittels eines konzentrierten Tränkharzes ein Overlay und ein Deco-Papier als Deckschicht gemeinsam zu verpressen. Weiterhin kann das Tränkharz zur Herstellung von Overlays, beispielsweise, vorzugsweise imprägnierte, Cellulose, insbesondere α-Cellulose, für Laminatfußböden, die beispielsweise mit einer Oberflächenkomponente wie Pigmenten oder oberflächenresistentem Korund versetzt sind, in einem Arbeitsgang verarbeitet werden.

EP 0 052 211 A1 beschreibt ein Modifizierungsmittel für Aminoplastharze, das seinerseits ein Aminoplastkondensat darstellt. Dieses wird erhalten, indem man Formaldehyd und Melamin in Gegenwart eines mehrwertigen Alkohols in wässriger Lösung oberhalb von pH7 umsetzt, wobei man das Molverhältnis F : M mehrwertigem Alkohol wie 1 bis 1,25 : 1 :0,5 bis 6 wählt.

EP 0 077 067 A1 betrifft eine wässrige Lösung eines Melamin-FormaldehydHarzes mit einem Festharzanteil von mehr als 60 Gew.-%, enthaltend ein Melamin-Formaldehyd-Vorkondensat und gegebenenfalls ein oder mehrere Modifizierungsmittel, wobei bei dem Vorkondensat das Molverhältnis Melamin : Formaldehyd = 1 : (1,5 bis 1,8) beträgt.

Bei den vorgenannten Anwendungen ergeben sich an das Tränkharz die folgenden Anforderungen:
Zum einen ist es notwendig, daß das Trägermaterial möglichst schnell und vollständig von dem Tränkharz durchdrungen wird. Darüber hinaus ist es notwendig, daß das Tränkharz so konzentriert wie möglich vorliegt, um die Gebindegröße und damit letztendlich die Transports- und Lagerungskosten so gering wie möglich zu halten. Weiterhin ergibt sich durch hochkonzentrierte Tränkharze eine Energieersparnis beim Eindampfen durch die geringe Wassermenge.

Weiterhin ist es erforderlich, daß das Tränkharz oder Harzzusammensetzung eine ausreichende Lagerstabilität besitzt, so daß es zum einen gut transportierbar und darüber hinaus über eine lange Zeit bevorratbar ist.

Ein Tränkharz bzw. die Harzzusammensetzung ist dann lagerstabil, wenn es seine Eigenschaften über die Lagerungszeit nicht verändert. Insbesondere ist eine Eintrübung des Tränkharzes unerwünscht, die im Ergebnis zu Tränkharzprodukten mit unerwünschten Eigenschaften, beispielsweise geringem Glanz oder einer Inhomogenität der mit dem Tränkharz versetzten Schicht, führt.

Eine weitere Anforderung, die an das Tränkharz gestellt wird, ist, dass sich in diesen Tränkharzen kleine Feststoffteilchen gut dispergieren lassen.

Eine stabile Dispersion derartiger Teilchen liegt dann vor, wenn diese Teilchen nach Beendigung des Dispergiervorgangs sich nicht sofort absetzen, sondern vielmehr für einen längeren Zeitraum in "Schwebe" bleiben. Ein derartiger Zeitraum beträgt vorzugsweise 1 bis 10, bevorzugt 2 bis 5 und besonders bevorzugt 3 bis 4 Stunden.

Eine andere Anforderung an ein Tränkharz besteht darin, daß zum in "Schwebe-Halten" der kleinen Teilchen kein Verdicker wie Methyl- oder Ethylcellulose eingesetzt werden muß.

Daher liegt der Erfindung die Aufgabe zugrunde, ein Tränkharz zur Verfügung zu stellen, das zum einen eine hohe Lagerstabilität aufweist, zudem hochkonzentriert ist, weiterhin gut in die zu tränkenden Materialien eindringt und stabile Dispersionen liefert.

Diese Aufgabe wurde durch eine erfindungsgemäße wäßrige Harzzusammensetzung, beinhaltend neben Wasser einen Gehalt an einem Harz in einem Bereich von 65 bis 80 Gew.-%, bezogen auf die wäßrige Harzzusammensetzung, wobei das Harz erhältlich ist aus Melamin und Formaldehyd und gegebenenfalls mindestens eines Zusatzstoffes, wobei die wäßrige Harzzusammensetzung eine Viskosität von 100 bis 3.000 mPa˙s bei 20 °C besitzt und einen Trübungspunkt im Bereich von 40 bis 65 °C besitzt, und wobei bei der Herstellung der Harzzusammensetzung bis zum Erreichen des Gehalts an dem Harz und der Viskosität Wasser entfernt wird, gelöst.

Eine bevorzugte erfindungsgemäße Harzzusammensetzung beinhaltet neben Wasser einen Gehalt an einem Harz im Bereich von 65 bis 79, bevorzugt 68 bis 75 und besonders bevorzugt 69 bis 73 Gew.-%, bezogen auf die wäßrige Harzzusammensetzung.

Weiterhin ist eine Harzzusammensetzung erfindungsgemäß bevorzugt, die eine Viskosität von 100 bis 1.000, bevorzugt 150 bis 900 und besonders bevorzugt 200 bis 800 mPa^{˙}s bei 20 °C besitzt.

Ferner besitzt die erfindungsgemäße wäßrige Harzzusammensetzung in einer bevorzugten Ausführungsform weniger als 0,5, bevorzugt weniger als 0,4 und besonders bevorzugt weniger als 0,3 Gewichtsteile Caprolactam, jeweils bezogen auf die Summe der Gewichtsteile von Melamin und Formaldehyd.

Weiterhin bevorzugt ist eine erfindungsgemäße Harzzusammensetzung mit 4 bis 12, bevorzugt 5 bis 10 und besonders bevorzugt 6 bis 9 Gewichtsteilen eines mehrwertigen Alkohols, vorzugsweise eines C₂- bis C₁₂-Diols, vorzugsweise Butandiol-1,4, bezogen auf die wäßrige Harzzusammensetzung.

Zudem ist es bevorzugt, daß die erfindungsgemäße wäßrige Harzzusammensetzung zusätzlich zu den vorgenannten Eigenschaften noch mindestens eine der folgenden aufweist:
- eine Dichte bei 20 °C im Bereich von 1,1 bis 1,5, bevorzugt 1,15 bis 1,45 und besonders bevorzugt 1,2 bis 1,4 g/ml;
- einen pH-Wert im Bereich von 8 bis 12, bevorzugt 8,5 bis 11 und besonders bevorzugt 9 bis 10,5;
- einen Trübungspunkt im Bereich von bevorzugt 45 bis 65 und besonders bevorzugt 50 bis 65°C.

In einer erfindungsgemäß bevorzugten Ausführungsform der wäßrigen Harzzusammensetzung sind als zusätzliche Eigenschaften sowohl die Dichte als auch der pH-Wert verwirklicht. In einer anderen erfindungsgemäßen Ausführungsform der Harzzusammensetzung sind als zusätzliche Eigenschaften sowohl die Dichte als auch der Trübungspunkt verwirklicht. Wieder in einer anderen erfindungsgemäßen Ausführungsform der wäßrigen Harzzusammensetzung sind als zusätzliche Eigenschaften sowohl der pH-Wert als auch der Trübungspunkt gegeben. In einer anderen erfindungsgemäßen Ausführungsform der wäßrigen Harzzusammensetzung liegen als zusätzliche Eigenschaften die Dichte, der pH-Wert sowie der Trübungspunkt vor.

Für die erfindungsgemäße wäßrige Harzzusammensetzung kann jedes dem Fachmann bekannte Melamin eingesetzt werden, wobei großtechnisch gewonnene Melamine besonders bevorzugt sind.

Auch das Formaldehyd kann in jeder dem Fachmann bekannten Form eingesetzt werden. Bewährt hat es sich jedoch für die erfindungsgemäße wäßrige Harzzusammensetzung, Formaldehyd in wäßriger Lösung einzusetzen. Diese wäßrigen Formaldehydlösungen weisen im Bereich von 20 bis 80, bevorzugt 30 bis 60 und besonders bevorzugt 35 bis 50 Gew.-% Formaldehyd auf.

Als Zusatzstoffe für die erfindungsgemäße wäßrige Harzzusammensetzung kann jede Kombination von Thioharnstoff, Alkali(hydrogen)sulfit, -Dithionit, -(Formaldehyd)sulfoxylat oder ein anderes löslisches Salz und vorteilhafterweise, jedes für sich oder in Kombination, ein am Stickstoff zweifach alkyliertes wasserlösliches Säureamid oder ein mehrwertiger Alkohol eingesetzt werden.

Bevorzugte erfindungsgemäße wäßrige Harzzusammensetzungen enthalten als Zusatzstoffe 0,5 bis 15, vorzugsweise 0,5 bis 7,5 und besonders bevorzugt 1 bis 5 Gew.-% Thioharnstoff, bezogen auf wäßrige Harzzusammensetzung. Weiterhin wird der Zusatzstoff Alkali(hydrogen)sulfit in einer Menge von 0,005 bis 0,2, vorzugsweise 0,01 bis 0,15 Mol, bezogen auf 1 Mol Melamin, eingesetzt. Weiterhin hat sich in der erfindungsgemäßen wäßrigen Harzzusammensetzung bis zu 6, bevorzugt 2 bis 6 Gew.-% eines Carbonsäureamids oder eines alkylierten Carbonsäureamids und/oder bis zu 10, bevorzugt 2 bis 8 Gew.-% eines mehrwertigen Alkohols, vorzugsweise eines Diols oder auch mehrerer Säureamide bzw. Alkohole, bezogen auf Melamin und Formaldehyd, bewährt.

Carbonsäureamide sind insbesondere Caprolactam, Sulfanilamid, Toluolsulfonamid und Fettsäuredialkylamide, wie Dimethylformamid, Dimethylacetamid, Dimethylpropionamid, Methylethylformamid, Diethylformamid. Mehrwertige Alkohole im Sinne der Erfindung sind beispielsweise Ethylenglykol, Diethylenglykol, Triethylenglykol, Propylenglykol, Glycerin, Pentaeritrith, Neopentylglykol, Dipropylenglykol, Butandiol-1,4, Pentandiol-1,5 sowie Hexandiol-1,6.

Weiterhin betrifft die Erfindung ein Verfahren zur Herstellung einer wäßrigen Harzzusammensetzung, wobei ein Formaldehyd und ein Melamin sowie gegebenenfalls mindestens ein Zusatzstoff zu einer wäßrigen Kondensationsphase in Kontakt gebracht und bis zur Transparenz der Kondensationsphase erwärmt wird und bis zum Erreichen des in Anspruch 1 definierten Gehalts an einem Harz und der Viskosität Wasser entfernt wird.

Bei dem erfindungsgemäßen Verfahren ist es bevorzugt, daß die Herstellung unter mindestens einer der folgenden Bedingungen erfolgt:
- Molverhältnis Melamin : Formaldehyd im Bereich von 1 : 1,45 bis 1 : 1,7, bevorzugt 1,50 bis 1,68 und besonders bevorzugt 1,55 bis 1,66;
- Molverhältnis Melamin : Wasser 1 : 0,1 bis 3,0, bevorzugt 0,1 bis 2,8 und besonders bevorzugt 0,1 bis 2,5;
- Entfernen des Wassers durch Destillation bei Normaldruck;
- pH-Wert der wäßrigen Kondensationsphase im Bereich von 8 bis 10, bevorzugt 8,2 bis 9,7, besonders bevorzugt 8,4 bis 9,4, insbesondere bevorzugt 8,8 bis 9,3 und darüber hinaus bevorzugt 9,0 bis 9,2
- Temperaturbereich von 60 bis 160, bevorzugt 80 bis 120 und besonders bevorzugt 90 bis 110°C.

In einer anderen Ausführungsform des erfindungsgemäßen Verfahrens ist es bevorzugt, daß als Bedingung der pH-Wert in einem Bereich von 9,2 bis 9,4 liegt, wenn kein Amin zur Pufferung eingesetzt wird.

In einer weiteren Ausführungsform des erfindungsgemäßen Verfahrens ist es jedoch bevorzugt, den pH-Wert in einem Bereich von 8 bis 10, bevorzugt 8,4 bis 8,6 zu regeln, wenn ein als Puffer fungierendes Amin, beispielsweise ein Alkylethanolamin, vorzugsweise Dialkylethanolamin, insbesondere Diethylethanolamin, eingesetzt wird.

In einem erfindungsgemäßen Verfahren ist es vorteilhaft, daß zusätzlich die Bedingungen Molverhältnis Melamin:Formaldehyd sowie Molverhältnis Melamin:Wasser eingehalten werden.

In einer anderen erfindungsgemäßen Ausführungsform des Verfahrens ist es vorteilhaft, wenn als zusätzliche Bedingungen das Molverhältnis Melamin:Formaldehyd sowie das Molverhältnis Melamin:Wasser als auch der pH-Wert der wäßrigen Kondensationsphase eingehalten werden.

In einer weiteren Ausführungsform des erfindungsgemäßen Verfahrens ist es vorteilhaft, jede der vorgenannten Bedingungen einzuhalten.

Zudem ist es erfindungsgemäß bevorzugt, daß der pH-Wert während der Kondensationsreaktion in den zuvor beschriebenen Bereichen gehalten oder durch ein Amin, insbesondere Triethanolamin, gepuffert wird. Dieses erfolgt vorzugsweise durch die Zugabe entsprechender Laugen, beispielsweise Natronlauge.

Weiterhin betrifft die Erfindung eine wäßrige Harzzusammensetzung, die aus einem der vorgenannten Verfahren erhältlich ist. Hierbei ist es wiederum bevorzugt, daß die aus den Verfahren erhältliche wäßrige Harzzusammensetzung eine oder mehrere der zuvor definierten Eigenschaften besitzt.

In einem erfindungsgemäßen Verfahren zur Herstellung einer stabilen Tränkharzdispersion werden kleine Teilchen ausgewählt aus oberflächenresistenten Komponenten und Pigmenten in einer erfindungsgemäßen wäßrigen Harzzusammensetzung dispergiert. Dieses Herstellungsverfahren charakterisiert die stabile Tränkharzdispersion, die so erhältlich ist.

Bei den kleinen Teilchen handelt es sich um Teilchen mit einem mittleren Teilchendurchmesser im Bereich von 1 nm bis 100 µm und bevorzugt von 10 nm bis 10 µm.

Die kleinen Teilchen lassen sich zum einen in oberflächenresistente Komponenten, hier sei beispielhaft Korund erwähnt, und in Pigmente unterteilen.

Die kleinen Teilchen werden in einer Menge von 0,01 bis 50, bevorzugt 0,1 bis 30 und besonders bevorzugt 1 bis 10 Gew.-%, bezogen auf die wäßrige Harzzusammensetzung, eingesetzt.

Die stabile Tränkharzdispersion und die zur Herstellung der stabilen Tränkharzdispersion verwendete wäßrige Harzzusammensetzung zeichnet sich insbesondere dadurch aus, daß weder die eine noch die andere oder auch beide zusammen keinen Verdicker enthalten. Als Verdicker kommen insbesondere Alkylcellulosederivate, beispielsweise Methyl- oder Ethylcellulose, in Betracht.

Bei der thermischen Behandlung handelt es sich in der Regel um ein Erhitzen im Temperaturbereich von 60 bis 300, bevorzugt von 80 bis 250 und besonders bevorzugt 100 bis 210 °C. Die thermische Behandlung kann sowohl durch Heißluft, Infrarotstrahlung, Erwärmung oder Mikrowellen oder eine Kombination daraus erfolgen.

Besonders bevorzugt ist es, daß das Trägermaterial saugfähig für die wäßrige Harzzusammensetzung ist. Derartiger Trägermaterialien sind beispielsweise Cellulose, insbesondere α-Cellulose.

Weiterhin betrifft die Erfindung die Lagerung von wäßrigen Harzzusammensetzungen über einen Zeitraum von 1 bis 20, bevorzugt 1 bis 30 und besonders bevorzugt 1 bis 50 Tagen, wobei der Zeitraum nach der Herstellung der wäßrigen Harzzusammensetzung beginnt. Es ist bevorzugt, daß die wäßrige Harzzusammensetzung über diesen Zeitraum transparent bleibt. Die erfindungsgemäße Harzzusammensetzung liegt transparent vor, solange nach ISO 7027 100 TEF NTU unterschritten werden.

Zudem ist es bevorzugt, die erfindungsgemäße wäßrige Harzzusammensetzung zur Herstellung eines Verbundes oder zur Herstellung einer stabilen Tränkharzdispersion oder zur Lagerung zu verwenden.

Die Erfindung wird nun anhand nicht limitierender Beispiele verdeutlicht.

### BEISPIELE

### Beispiel 1: MV (Melamin:Formaldehyd) =1:1,57 (erfindungsgemäß)

In einem 21-Vierhalskolben werden 931,4 Teile Formaldehyd 40 %, 341,3 Teile VE-Wasser, 99,0 Teile Diethylenglykol, 120,6 Teile Caprolactamlösung 80 % und 3,7 Teile Amidosulfonsäure eingewogen.
Mit Natronlauge 25% wird das Gemisch auf einen pH-Wert von 8,9 bis 9,1 eingestellt. Nun werden 998,5 Teile Melamin zugegeben und das Reaktionsgemisch bis zum Rückfluß erhitzt. Nach 20 bis 30 Minuten ist das Melamin vollständig gelöst. Nach dem Lösen werden weitere 5 Minuten im Rückfluß kondensiert, bevor mit dem Austrag von 180 Teilen Destillat, unter Normaldruck, begonnen wird. Nach Beendigung der Destillation wird das Reaktionsgemisch bei 98 bis 100 °C kondensiert, bis der gewünschte Trübungspunkt (ca. 53 bis 63 °C) erreicht ist. Während der Kondensation wird der pH-Wert von 9,2 bis 9,4 durch Zulauf von Natronlauge 25 % geregelt.

Sobald das Reaktionsgemisch den gewünschten Trübungspunkt erreicht hat, wird sofort gekühlt und bei einer Kühltemperatur von 75 °C 3,7 Gewichtsteile Toluolsulfonamid zugegeben.

### Analytische Kenndaten:

| | | |
|---|---|---|
| Trockengehalt (2 Std./120 °C) | 65,6 | % |
| Dichte 20 °C | 1,278 | g/ml |
| Viskosität 20 °C | 241 | mPas |
| pH-Wert 20 °C | 9,6 | |
| Trübzeit 100 °C (0,5 % Härter 527) | 361 | Sek. |
| Trübungspunkt (1 + 5 ml) | 53 | °C |
| Aussehen | farblos, klar | |

### Beispiel 2: MV (Melamin:Formaldehyd) =1:1,66 (erfindungsgemäß)

In einem 21-Vierhalskolben werden 1145,1 Teile Formaldehyd 40 %, 70,9 Teile VE-Wasser, 112,3 Teile Butandiol 1.4 eingewogen. Mit Natronlauge 25 % wird das Gemisch auf einen pH-Wert von 8,8 eingestellt.
Nun werden 1159,4 Teile Melamin, 6,7 Teile Sulfanilamid und 3,9 Teile Diethylethanolamin zugegeben und zum Rückfluß erhitzt. Nach 30 bis 40 Minuten ist das Melamin vollständig gelöst. Nach dem Lösen werden weitere 5 Minuten im Rückfluß kondensiert, bevor mit dem Austrag von 71 Teilen Destillat, unter Normaldruck, begonnen wird. Nach Beendigung der Destillation wird das Reaktionsgemisch bei 98 bis 100 °C kondensiert, bis der gewünschte Trübungspunkt (ca. 60 bis 65 °C) erreicht ist. Während der Kondensation fällt der pH-Wert auf 8,4 bis 8,6.
Sobald das Reaktionsgemisch den gewünschten Trübungspunkt erreicht hat, wird sofort gekühlt.

### Analytische Kenndaten:

| | | |
|---|---|---|
| Trockengehalt (2 Std./120 °C) | 68,7 | % |
| Dichte 20 °C | 1,308 | g/ml |
| Viskosität 20 °C | 777 | mPas |
| pH-Wert 20 °C | 10,1 | |
| Trübzeit 100 °C (0,5 % Härter 527) | 684 | Sek. |
| Trübungspunkt (1 + 5 ml) | 60 | °C |
| Aussehen | farblos, klar | |

## Patentansprüche

1. Wäßrige Harzzusammensetzung, beinhaltend neben Wasser einen Gehalt an Harz im Bereich von 65 bis 80 Gew.-%, bezogen auf die wäßrige Harzzusammensetzung, wobei das Harz erhältlich ist aus Melamin und Formaldehyd und gegebenenfalls mindestens einem Zusatzstoff, wobei die wäßrige Harzzusammensetzung eine Viskosität im Bereich von 100 bis 3.000 mPa˙s bei 20°C und einen Trübungspunkt im Bereich von 40 bis 65°C besitzt, und wobei bei der Herstellung des Harzzusammensetzung bis zum Erreichen des gehalts an dem Harz und der Viskosität Wasser entfernt wird.

2. Wäßrige Harzzusammensetzung nach Anspruch 1, mit 4 bis 12 Gewichtsteilen eines mehrwertigen Alkohols, bezogen auf die wäßrige Harzzusammensetzung.

3. Wäßrige Harzzusammensetzung nach Anpruch 1 oder 2, mit mindestens einer der folgenden Eigenschaften:
- einer Dichte bei 20 °C im Bereich von 1,1 bis 1,5 g/ml;
- einem pH-Wert im Bereich von 8 bis 12.

4. Verfahren zur Herstellung einer wäßrigen Harzzusammensetzung nach einem der Ansprüche 1 bis 3, wobei ein Formaldehyd und ein Melamin sowie gegebenenfalls mindestens ein Zusatzstoff in einer wäßrigen Kondensationsphase in Kontakt gebracht und bis zur Transparenz der Kondensationsphase erwärmt wird und bis zum Erreichen des Gehalts an dem Harz und der Viskosität Wasser entfernt wird.

5. Verfahren nach Anspruch 4, wobei die Herstellung unter mindestens einer der folgenden Bedingungen:
- Molverhältnis Melamin:Formaldehyd 1:1,45 bis 1,7;
- Molverhältnis Melamin:Wasser 1:0,1 bis 3,0;
- Entfernen des Wassers durch Destillation bei Normaldruck;
- pH-Wert der wäßrigen Kondensationsphase im Bereich von 8 bis 10;
- Temperaturbereich von 60 bis 110 °C,
erfolgt.

6. Verfahren zur Herstellung einer stabilen Tränkharzdispersion, wobei eine in einem der Ansprüche 1 bis 3 definierte oder nach einem Verfahren gemäß Anspruch 4 oder 5 erhältliche wäßrige Harzzusammensetzung mit kleinen Teilchen dispergiert wird.

7. Tränkharzdispersion, wobei eine in einem der Ansprüche 1 bis 3 definierte oder nach einem Verfahren gemäß Anspruch 4 oder 5 erhältliche wäßrige Harzzusammensetzung mit kleinen Teilchen ausgewählt aus Oberflächen resistenten Komponenten und Pigmenten dispergiert wird.

8. Verwendung der in einem der Ansprüche 1 bis 3 definierten oder nach einem Verfahren gemäß Anspruch 4 oder 5 erhältlichen wäßrigen Harzzusammensetzung zur Herstellung eines Verbundes oder einer stabilen Tränharzdispersion oder zur Lagerung.

## Claims

1. An aqueous resin composition comprising in addition to water an amount of resin in the range from 65 to 80% by weight, based on the aqueous resin composition, the resin being obtainable from melamine and formaldehyde and if appropriate at least one additive, the aqueous resin composition having a viscosity in the range from 100 to 3 000 mPa·s at 20°C and a cloud point in the range from 40 to 65°C, and, during the preparation of the resin composition, water being removed until the amount of the resin and the viscosity are attained.

2. The aqueous resin composition according to claim 1, having from 4 to 12 parts by weight of a polyhydric alcohol, based on the aqueous resin composition.

3. The aqueous resin composition according to claim 1 or 2, having at least one of the following properties:
- a density at 20°C in the range from 1.1 to 1.5 g/ml;
- a pH in the range from 8 to 12.

4. A process for preparing an aqueous resin composition according to one of claims 1 to 3, in which a formaldehyde and a melamine and also if appropriate at least one additive are brought into contact in an aqueous condensation phase which is heated until it becomes transparent and from which water is removed until the amount of the resin and the viscosity are attained.

5. The process according to claim 4, wherein the preparation takes place under at least one of the following conditions:
- melamine:formaldehyde molar ratio 1:1.45 to 1.7;
- melamine:water molar ratio 1:0.1 to 3.0;
- removal of the water by distillation under atmospheric pressure;
- pH of the aqueous condensation phase in the range from 8 to 10;
- temperature range from 60 to 110°C.

6. A process for preparing a stable impregnating resin dispersion, wherein an aqueous resin composition defined in one of claims 1 to 3 or obtainable by a process according to claim 4 or 5 is dispersed with small particles.

7. An impregnating resin dispersion, wherein an aqueous resin composition defined in one of claims 1 to 3 or obtainable by a process according to claim 4 or 5 is dispersed with small particles selected from suface-resistant components and pigments.

8. The use of the aqueous resin composition defined in one of claims 1 to 3 or obtainable by a process according to claim 4 or 5 to produce a composite or to prepare a stable impregnating resin dispersion or for storage.

## Revendications

1. Composition de résine aqueuse contenant à côté de l'eau, une teneur en résine comprise entre 65 et 80% en poids, par rapport à la composition de résine aqueuse, la résine étant obtenue à partir de mélamine et de formaldéhyde et le cas échéant d'au moins un additif, la composition de résine aqueuse présentant une viscosité de 100 à 3000 mPa.s à 20°C et un point de trouble compris entre 40 et 65°C, et l'eau étant éliminée lors de la préparation de la composition de résine jusqu'à l'obtention de la teneur en résine et de la viscosité.

2. Composition de résine aqueuse selon la revendication 1, avec 4 à 12 parties en poids d'un alcool polyvalent, sur base de la composition de résine aqueuse.

3. Composition de résine aqueuse selon la revendication 1 ou 2, avec au moins une des caractéristiques suivantes :
- une densité à 20°C de 1,1 à 1,5 g/ml;
- un pH compris entre 8 et 12.

4. Procédé de préparation d'une composition de résine aqueuse selon l'une des revendications 1 à 3, un formaldéhyde et une mélamine ainsi que le cas échéant au moins un additif étant mis en contact lors d'une phase aqueuse de condensation et étant chauffés jusqu'à la transparence de la phase de condensation et l'eau étant éliminée jusqu'à l'obtention de la teneur en résine et de la viscosité.

5. Procédé selon la revendication 4, la préparation se faisant dans au moins l'une des conditions suivantes
- rapport molaire mélamine:formaldéhyde de 1:1,45 à 1,7;
- rapport molaire mélamine:eau de 1:0,1 à 3,0;
- élimination de l'eau par distillation à pression normale;
- pH de la phase aqueuse de condensation de 8 à 10;
- plage de températures de 60 à 110°C.

6. Procédé de préparation d'une dispersion stable de résine d'imprégnation, une composition de résine aqueuse telle que définie selon l'une des revendications 1 à 3 ou qu'on obtient avec un procédé selon l'une des revendications 4 ou 5 étant dispersée avec de petites particules.

7. Dispersion de résine d'imprégnation, une composition de résine aqueuse telle que définie selon l'une des revendications 1 à 3 ou qu'on obtient avec un procédé selon l'une des revendications 4 ou 5 étant dispersée avec de petites particules choisies parmi des composants résistants en surface et des pigments.

8. Utilisation des compositions de résine aqueuses telle que définies selon l'une des revendications 1 à 3 ou qu'on obtient avec un procédé selon l'une des revendications 4 ou 5 pour la fabrication d'un composite ou d'une dispersion stable de résine d'imprégnation ou pour l'entreposage.
